(19) **Europäisches Patentamt**
**European Patent Office**
**Office européen des brevets**

(11) **EP 2 473 315 B1**

## (12) FASCICULE DE BREVET EUROPEEN

(45) Date de publication et mention de la délivrance du brevet:
**15.01.2014 Bulletin 2014/03**

(21) Numéro de dépôt: **10762988.3**

(22) Date de dépôt: **17.08.2010**

(51) Int Cl.:
**B23K 26/06** (2006.01)   **B23K 26/38** (2006.01)
**B23K 26/04** (2006.01)   **G02B 1/02** (2006.01)
**G02B 13/14** (2006.01)

(86) Numéro de dépôt international:
**PCT/FR2010/051723**

(87) Numéro de publication internationale:
**WO 2011/027065 (10.03.2011 Gazette 2011/10)**

(54) **TETE DE FOCALISATION LASER AVEC DES LENTILLES EN ZNS AYANT UNE EPAISSEUR AUX BORDS D'AU MOINS 5 MM ; INSTALLATION ET PROCEDE DE COUPAGE LASER EMPLOYANT UNE TELLE TETE DE FOCALISATION**

LASERFOKUSSIERUNGSKOPF MIT ZNS-LINSEN MIT EINER PERIPHEREN DICKE VON MINDESTENS 5 MM SOWIE LASERSCHNEIDEEINHEIT UND -VERFAHREN MIT EINEM SOLCHEN FOKUSSIERUNGSKOPF

LASER-FOCUSING HEAD WITH ZnS LENSES HAVING A PERIPHERAL THICKNESS OF AT LEAST 5 MM AND LASER CUTTING UNIT AND METHOD USING ONE SUCH FOCUSING HEAD

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **01.09.2009 FR 0955949**

(43) Date de publication de la demande:
**11.07.2012 Bulletin 2012/28**

(73) Titulaire: **L'Air Liquide Société Anonyme pour l'Etude et l'Exploitation des Procédés Georges Claude**
**75007 Paris (FR)**

(72) Inventeurs:
• **BRIAND, Francis**
  **F-75009 Paris (FR)**
• **BALLERINI, Gaia**
  **F-75010 Paris (FR)**
• **DEBECKER, Isabelle**
  **F-75017 Paris (FR)**
• **JOUANNEAU, Thomas**
  **F-75019 Paris (FR)**
• **MAAZAOUI, Hakim**
  **F-95480 Pierrelaye (FR)**
• **VERNA, Eric**
  **F-95650 BoissyL'aillerie (FR)**

(74) Mandataire: **Pittis, Olivier**
  **L'Air Liquide, S.A.**
  **Service Brevets & Marques**
  **75, Quai d'Orsay**
  **75321 Paris Cedex 07 (FR)**

(56) Documents cités:
**WO-A1-2010/029243   FR-A1- 2 897 007**
**JP-A- 2009 226 473   US-A1- 2009 067 040**
**US-B1- 6 289 155**

• **"MELLES GRIOT CATALOGUE,CO2 LASER OPTICS", MELLES-GRIOT CATALOG, 1 janvier 1995 (1995-01-01), pages 16-1, XP002220903,**

**EP 2 473 315 B1**

**Description**

L'invention porte sur une tête de focalisation de faisceau laser conformément au preambule de la revendication 1 (voir, par exemple, FR 2 897 007), avec une configuration optique particulière mise en oeuvre dans une tête de coupage par laser à solide, en particulier à fibre, permettant de maîtriser les problématiques de dérive focale et d'endommagement laser des optiques de la tête de focalisation, et sur une installation laser équipée d'une telle tête de focalisation, en particulier une installation laser à fibres d'ytterbium..

Les nouvelles générations de lasers à solide, tels que les lasers à fibre ou à disque, ont bénéficié d'importantes avancées et combinent des puissances de plusieurs kW avec d'excellents facteurs de qualité ou BPP (pour Beam Product Parameter), contrairement aux lasers à milieu solide massif, tels les lasers Nd:YAG.

Au-delà des caractéristiques qui font de ces lasers des sources adaptées à la découpe de matériaux métalliques, en l'occurrence une longueur d'onde plus courte (1.07 $\mu$m) que celle des lasers $CO_2$ (10.6 $\mu$m), mieux absorbée par le métal et transportable par fibre optique, un encombrement réduit et une plus grande fiabilité, leur grande brillance améliore significativement les performances de découpe des matériaux métalliques ou non.

Typiquement, une installation de coupage laser fibre comprend une source laser et des dispositifs optiques pour transporter le faisceau laser jusqu'à une tête de coupage, aussi appelée tête de focalisation, qui assure la focalisation du faisceau dans l'épaisseur d'une pièce à couper.

La source laser est un laser à fibres dopées à l'ytterbium (Yb), équipé d'au moins une fibre optique de convoyage de faisceau, et la tête de coupage comporte des dispositifs optiques de collimation, de redirection et de focalisation permettant d'amener un faisceau laser focalisé jusqu'à une pièce à couper.

Les dispositifs optiques, telle la lentille de focalisation, d'une tête de coupage laser doivent supporter de fortes densités surfaciques de puissance, typiquement entre 1 et 10 kW/cm$^2$ selon les caractéristiques de la source laser et le diamètre de faisceau sur les optiques, et ce, de manière soutenue tout en fonctionnant dans des environnements pollués qui les fragilisent.

En régime continu d'émission laser, l'endommagement des optiques se manifeste généralement sous la forme d'une dégradation progressive des performances des optiques, dans un premier temps sans dommages visibles, qui résulte essentiellement de phénomènes thermiques.

En effet, l'absorption résiduelle des revêtements de surfaces et des substrats des optiques conduit à un échauffement non uniforme du composant de l'optique et à l'accumulation de contraintes thermiques, en particulier pour des composants transmissifs, tels que les lentilles. Ces mécanismes affectent les paramètres et la qualité du faisceau laser et peuvent, après une longue période d'irradiation, conduire à une détérioration des optiques : apparition de brûlures, décollement des revêtements...

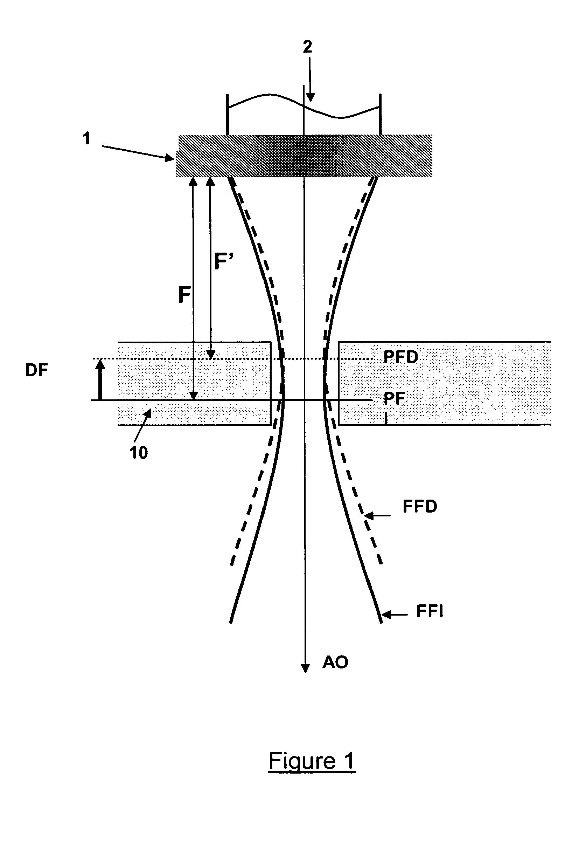

L'échauffement des optiques d'une tête de coupage engendre aussi une dérive DF du point de focalisation du faisceau liée à l'effet de lentille thermique, encore appelée dérive focale, laquelle est illustrée en Figure 1. Au cours de l'exposition d'une lentille 1, celle-ci est chauffée en son centre par le faisceau laser 2 collimaté de forte puissance délivré selon l'axe optique (AO), alors que ses bords sont plus froids. Un gradient thermique s'établit radialement dans la lentille 1. L'amplitude de ce gradient est d'autant plus grande que la densité de puissance reçue par la lentille 1 augmente. Il résulte de ce gradient thermique un gradient dans l'indice de réfraction du matériau. Ce phénomène, combiné à l'effet de dilatation thermique du matériau de la lentille 1, induit une modification du rayon de courbure effectif de la lentille 1 et une modification de ses caractéristiques de focalisation. Le plan focal initial (PFI) du faisceau, situé à une distance F de la lentille, est translaté le long de la direction de propagation du faisceau et se rapproche de la lentille 1 de focalisation, à une distance F', jusqu'à atteindre un plan de focalisation décalé (PFD). On assiste alors à une transformation du faisceau focalisé initial (FFI) en un faisceau focalisé décalé (FFD) présentant de moins bonnes caractéristiques de coupe.

La contamination de la surface des optiques par l'environnement, c'est-à-dire des poussières, des projections métalliques ou de l'humidité, et leur vieillissement sont des facteurs qui augmentent l'absorption des lentilles et aggravent progressivement le phénomène d'échauffement, conduisant à l'augmentation de l'amplitude de la dérive focale au fil du temps.

Or, les performances d'un procédé de coupage laser industriel sont évaluées en termes de vitesse de coupe, de qualité de coupe, à savoir des faces de coupe droites, lisses et sans bavures, et de tolérances sur les paramètres de fonctionnement du procédé.

Le procédé de coupage par laser à fibre est sensible aux variations de la position du point focal du faisceau par rapport à la surface de la pièce traitée, surtout lorsqu'il s'agit de découper des tôles de fortes épaisseurs, à savoir de 4 mm et au-delà. Les tolérances admises sur le positionnement du point focal sont typiquement de ± 0.5 mm. Si la position focale du faisceau laser varie au-delà des tolérances admises, il n'est plus possible de maintenir des performances de coupe optimales.

Une solution est alors de rechercher de nouveaux paramètres de coupe pour compenser la dérive focale, ou de remplacer les optiques de la tête de focalisation. Il en résulte une dégradation de la productivité du procédé industriel automatisé.

Un problème critique se pose lorsque la position du point focal varie au cours de l'opération de découpe car cela conduit à des performances de coupe inégales d'une pièce à l'autre, voire d'une face à l'autre d'une même pièce.

Les phénomènes décrits ci-avant montrent que la durabilité des performances d'un procédé de coupage est fortement liée à la résistance des dispositifs optiques assurant la propagation du faisceau laser. Le positionnement du point focal étant un paramètre important du procédé de coupage par laser à fibre, il est essentiel que la position focale du faisceau soit la plus stable possible et que les déviations restent dans les tolérances admises. Les distorsions thermiques subies par les éléments optiques à forte puissance doivent être minimales pour éviter leur endommagement. Toutes ces exigences doivent être prises en compte lors du choix des optiques constituant le système de focalisation d'une tête de coupage laser.

Or, le problème qui se pose est qu'il existe des difficultés à transporter les faisceaux laser de forte brillance pour les applications de coupage. Les puissances laser disponibles ne cessent de croître mais c'est la résistance des dispositifs optiques qui limitent les puissances pouvant être mises en oeuvre pour le coupage. En effet, les faisceaux de forte brillance sont caractérisés par leurs fortes puissances combinées à d'excellents facteurs de qualité, c'est-à-dire de faibles BPP, par exemple de l'ordre de 0,33 mm.mrad. Il en résulte de très fortes densités de puissance sur les surfaces des optiques des têtes de focalisation et une augmentation des gradients et distorsions thermiques. Il est aussi constaté que la résistance des matériaux optiques à l'endommagement laser est moins bonne avec les lasers à forte brillance qu'avec les lasers classiques de type $CO_2$, car la longueur d'onde plus courte de ces lasers est plus sensible aux défauts présents dans les substrats et les revêtements de surface des éléments optiques, ce qui peut causer localement un échauffement excessif.

Le problème à résoudre est dès lors de pouvoir maîtriser les problématiques de dérive focale et d'endommagement des optiques susmentionnés se posant lors de l'utilisation de laser solides, en particulier de laser à fibre, notamment à fibre d'ytterbium, afin de garantir durablement les performances de coupe, en particulier lors de la mise en oeuvre d'un procédé de coupage laser à forte puissance, c'est-à-dire à une puissance d'au moins 1 kW.

La solution de l'invention est alors une tête de focalisation de faisceau laser comprenant une lentille de collimation et une lentille de focalisation, où la lentille de collimation et la lentille de focalisation sont en ZnS et ont une épaisseur aux bords d'au moins 5 mm, et un miroir de renvoi fonctionnant à un angle d'incidence ($\alpha$) compris entre 40 et 50° est agencé, sur le trajet du faisceau laser au sein de ladite tête de focalisation, entre les lentilles de collimation et de focalisation.

Selon le cas, la tête de focalisation de l'invention peut comprendre l'une ou plusieurs des caractéristiques suivantes :

- la lentille de collimation et la lentille de focalisation ont une épaisseur aux bords comprise entre 5 et 10 mm, de préférence entre 6 et 8 mm.
- la lentille de collimation et la lentille de focalisation ont un diamètre compris entre 35 et 55 mm.
- le miroir de renvoi est en silice.

L'invention porte également sur une installation de coupage par faisceau laser comprenant :

- un dispositif à laser solide émettant un faisceau laser de longueur d'onde comprise entre 1.06 et 1.10 $\mu$m et de puissance comprise entre 0.1 et 25 kW,
- une tête de focalisation selon l'une des revendications précédentes, et
- une fibre de convoyage reliant le dispositif à laser solide à la tête de focalisation de manière à acheminer le faisceau laser émis par le dispositif à laser solide à la tête de focalisation.

Selon le cas, l'installation de l'invention peut comprendre l'une ou plusieurs des caractéristiques suivantes :

- le dispositif à laser solide est de type à fibres, de préférence à fibres d'ytterbium.
- le dispositif à laser solide émet un faisceau laser de puissance comprise entre 1 et 5 kW en mode continu, quasi-continu ou impulsionnel, de préférence en mode continu.
- la fibre de convoyage a un diamètre inférieur ou égal à 150 $\mu$m, de préférence un diamètre de 50 $\mu$m ou de 100 $\mu$m.
- le dispositif à laser solide émet un faisceau laser ayant un BPP compris entre 1.6 et 4 mm.mrad.
- la fibre de convoyage a un diamètre de 50 $\mu$m et un BPP compris entre 1.6 et 2.2 mm.mrad, et la lentille de collimation a une distance focale comprise entre 70 et 120 mm, et la lentille de focalisation a une distance focale comprise entre 200 et 450 mm. Plus précisément, dans le cas d'une fibre de convoyage de diamètre 50 $\mu$m, dont le BPP est compris entre 1.6 et 2.2 mm.mrad, la distance focale de la lentille de collimation est comprise entre 70 et 120 mm, de préférence comprise entre 70 et 90 mm. Pour couper un matériau dont l'épaisseur est strictement inférieure à 10 mm, la distance focale de focalisation est avantageusement comprise entre 200 et 300 mm, de préférence entre 220 et 280 mm, alors que pour couper un matériau dont l'épaisseur est supérieure ou égale à 10 mm, la distance focale de focalisation est avantageusement comprise entre 350 et 450 mm, de préférence entre 380 et 420 mm.

- la fibre de convoyage (FDC) a un diamètre de 100 μm et un BPP compris entre 2.6 et 4 mm.mrad, et la lentille de collimation a une distance focale comprise entre 130 et 180 mm, et la lentille de focalisation a une distance focale comprise entre 200 et 450 mm. Plus précisément, dans le cas d'une fibre de convoyage de diamètre 100 μm, dont le BPP est compris entre 2.6 et 4 mm.mrad, la distance focale de la lentille de collimation est comprise entre 130 et 180 mm, de préférence comprise entre 140 et 180 mm. Pour couper un matériau dont l'épaisseur est strictement inférieure à 10 mm, la distance focale de focalisation est avantageusement comprise entre 200 et 300 mm, de préférence entre 220 et 280 mm, alors que pour couper un matériau dont l'épaisseur est supérieure ou égale à 10 mm, la distance focale de focalisation est avantageusement comprise entre 350 et 450 mm, de préférence comprise entre 380 et 420 mm.
- la lentille de focalisation a une distance focale comprise entre 200 et 450 mm.

Par ailleurs, l'invention concerne également un procédé de coupage par faisceau laser d'une pièce métallique, dans lequel on met en oeuvre une tête de focalisation ou une installation de coupage par faisceau laser selon l'invention.

La présente invention, qui porte notamment sur une configuration optique particulière utilisée dans une tête de coupage par laser à fibre, va être mieux comprise grâce à la description détaillée suivante et des Figures annexées parmi lesquelles :

- la Figure 2 représente le schéma de principe d'un système optique typique d'une tête de coupage et les paramètres caractéristiques du faisceau laser se propageant à travers le système optique,
- la Figure 3 schématise le principe de fonctionnement d'une installation et d'un procédé de coupage laser selon l'invention,
- la Figure 4 représente une comparaison de l'évolution de la position du point focal du faisceau au cours de l'irradiation laser d'un système de lentilles en ZnS ou en silice fondue (S), et
- la Figure 5 est une comparaison de l'évolution de la position du point focal du faisceau focalisé par un système de lentilles en ZnS comprenant une lentille de collimation d'épaisseur aux bords 2 ou 7 mm.

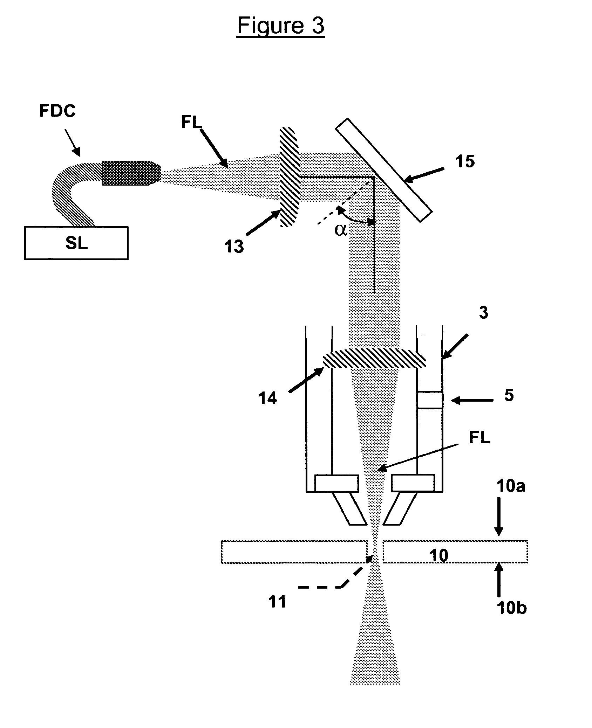

Une installation de coupage selon l'invention comprend une source laser SL à solide équipée d'au moins une fibre optique de convoyage FC de faisceau et une tête de focalisation 3, encore appelée tête de coupage, pour transporter et focaliser le faisceau laser FL sur ou dans la pièce 10 à couper. Les caractéristiques et les plages de fonctionnement de l'installation sont expliquées ci-après et illustrées en Figure 3.

La tête de coupage 3 comprend, de manière classique, des dispositifs optiques de collimation, de redirection et de focalisation du faisceau laser.

Par ailleurs, le faisceau laser est émis par un dispositif ou générateur laser à solide, préférablement un laser à fibres dopées à l'ytterbium (Yb). Dans le dispositif laser, l'effet laser, c'est-à-dire le phénomène d'amplification de la lumière servant à générer le rayonnement laser, est obtenu au moyen d'un milieu amplificateur préférablement pompé par des diodes laser et constitué d'une ou de typiquement plusieurs fibres optiques dopées, préférablement en silice dopées à l'ytterbium.

La longueur d'onde du rayonnement émis en sortie du dispositif laser est comprise entre 1.06 et 1.10 μm, et la puissance laser se situe entre 0.1 et 25 kW, typiquement entre 1 et 5 kW.

Le laser peut fonctionner en mode continu, quasi-continu ou impulsionnel, mais la présente invention est particulièrement avantageuse lorsque l'on travaille en mode continu car il s'agit du mode d'irradiation le plus sévère pour les optiques d'une tête de coupage.

Le faisceau généré par la source laser solide est émis et convoyé jusqu'à la tête de focalisation au moyen d'au moins une fibre optique de convoyage en silice non-dopée, de diamètre inférieur à 150 μm, par exemple égal à 50 ou 100 μm.

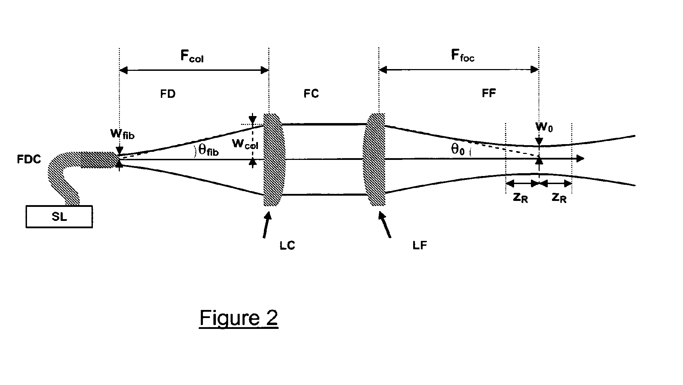

De manière générale, utiliser une source laser de forte brillance, tels les lasers à fibre, permet de générer des faisceaux de forte puissance avec d'excellents facteurs de qualité. Le degré de qualité d'un faisceau laser se mesure à son facteur de qualité ou Beam Parameter Product (BPP). Le BPP est déterminé par les caractéristiques de la source laser SL et le diamètre de la fibre de convoyage FDC. Il s'exprime comme le produit du rayon $w_0$ au col du faisceau laser focalisé par son demi-angle de divergence $\theta_0$, comme illustré sur la Figure 2. Le BPP est aussi défini par le produit du rayon $w_{fib}$ de la fibre optique de convoyage émettant le faisceau laser par le demi-angle de divergence du faisceau en sortie de fibre $\theta_{fib}$. Ainsi, pour une fibre de 50 μm, le BPP du faisceau est typiquement compris entre 1.6 et 2 mm.mrad, alors que pour une fibre de 100 μm, le BPP est typiquement compris entre 2.7 et 4 mm.mrad.

Comme illustré sur la Figure 2, le système de focalisation de la tête de coupage laser est composé successivement, dans le sens de circulation du faisceau laser, d'au moins une lentille de collimation LC permettant d'obtenir un faisceau collimaté FC à partir d'un faisceau divergent FD, et d'au moins une lentille de focalisation LF permettant d'obtenir un faisceau focalisé FF et de concentrer l'énergie du laser sur la pièce à couper. Les distances focales de collimation et de focalisation sont choisies de manière à obtenir une tâche focale, encore appelé spot focal, ayant un diamètre adéquat pour avoir la densité de puissance nécessaire au coupage de la pièce.

Le diamètre du faisceau $2w_0$ dans le plan de focalisation est défini comme le produit du diamètre $2w_{fib}$ de la fibre par le grandissement optique G du système de focalisation et s'exprime :

$$2w_0 = 2w_{fib} \cdot G = 2w_{fib} \cdot \frac{F_{foc}}{F_{col}}$$

Où :

- G est donné par le rapport entre la distance focale $F_{foc}$ de la lentille de focalisation FC et la distance focale $F_{col}$ de la lentille de collimation LC.
- $w_0$ et $w_{fib}$ sont les rayons caractéristiques du faisceau dans le plan focal et de la fibre, respectivement. On entend par rayon caractéristique w la distance par rapport à l'axe optique où l'intensité chute à $1/e^2$ (environ 13.5%) de sa valeur maximale, ce qui signifie

que 86.5% de la puissance du faisceau est comprise dans le disque de rayon w. Tous les paramètres du faisceau sont définis d'après ce critère.

Le rayon du faisceau irradiant les optiques de collimation et de focalisation est donné par la relation suivante :

$$w_{col} = \theta_{fib} \cdot F_{col}$$

Le demi-angle de divergence $\theta_{fib}$ du faisceau émis par la fibre de convoyage se déduit de la valeur du BPP du faisceau focalisé grâce à la relation :

$$BPP = w_0 \cdot \theta_0 = w_{fib} \cdot \theta_{fib}$$

On définit la densité moyenne de puissance par unité de surface, aussi appelée densité de puissance (DP) et exprimée en $kW/cm^2$, irradiant les optiques de la façon suivante :

$$DP = \frac{P_{las}}{\pi w_{col}^2}$$

où : $P_{las}$ est la puissance totale du rayonnement émis par la source laser et $w_{col}$ est le rayon caractéristique du faisceau irradiant les optiques.

De là, on comprend les problèmes qui se posent lors de l'utilisation d'un générateur laser de forte brillance, tel qu'un laser à fibre, à savoir que :

- Ce type de source est caractérisé par de faibles BPP et donc par des faisceaux ayant une divergence $\theta_{fib}$ plus faible en sortie de fibre. Ce paramètre traduit la vitesse d'expansion en champ lointain du faisceau émis par la fibre de convoyage et détermine le diamètre du faisceau sur les optiques du système. A distance focale de collimation équivalente, un faisceau de meilleure qualité et donc de divergence plus faible a un diamètre $2w_{col}$ plus petit sur la lentille de collimation. Il en résulte une augmentation de DP. A titre indicatif, le Tableau 1 ci-après donne un comparatif des caractéristiques typiques de faisceau pour différents lasers, ainsi que les densités de puissance obtenues sur les optiques pour une puissance de 2 kW et une distance focale de la lentille de collimation égale à 100 mm.
- A grandissement optique identique, un faisceau de plus faible BPP est focalisé avec le même diamètre focal et possède une divergence $\theta_0$ plus faible. Sa longueur de Rayleigh $z_R = w_0/\theta_0$ est plus grande. Or le décalage du point focal induit par l'échauffement du système de focalisation à forte puissance est proportionnel à $z_R$.

<u>Tableau 1</u>

| Source laser | Nd:YAG (1.06 $\mu$m) | | Fibre (1.07 $\mu$m) |
|---|---|---|---|
| Pompage | Lampes | Diodes | Diodes |
| Diamètre typique de fibre ($\mu$m) | 600 | 400 | 100 |
| BPP typique (mm.mrad) | 25 | 15 | 3 |
| Divergence $\theta_{fib}$ (mrad) | 83 | 75 | 60 |
| $2w_{col}$ (mm) pour $F_{col}$=100mm | 16.7 | 15.0 | 12.0 |
| DP à 2 kW (kW/cm$^2$) | 0.9 | 1.1 | 1.8 |

On voit que la densité de puissance sur les lentilles augmente lorsque le faisceau gagne en qualité. Or l'amplitude du gradient thermique s'établissant dans les optiques sous irradiation laser augmente avec la densité de puissance supportée par les optiques. Il est donc astucieux de travailler avec des optiques présentant le meilleur comportement thermique possible pour éviter les problèmes de dérive focale et d'endommagement laser.

A cette fin, le système optique de l'invention combine les spécificités décrites ci-dessous, selon le schéma présenté en Figure 3.

La tête de coupage 3 est constituée de dispositifs optiques travaillant en transmission, c'est-à-dire ici des lentilles 13, 14, servant pour les opérations de collimation (en 13) et de focalisation (en 14) du faisceau laser FL issu de la fibre de convoyage et généré par la source laser solide SL.

On utilise avantageusement du sulfure de zinc (ZnS) comme substrat pour les lentilles de collimation 13 et de focalisation 14. En effet, l'amplitude du gradient thermique s'établissant dans les lentilles sous irradiation laser est inversement proportionnelle à la conductivité thermique du matériau constituant les lentilles. Or, la conductivité thermique du ZnS (0.272 W/cm/°C) est de l'ordre de 20 fois celle de la silice fondue (0.0138 W/cm/°C). Cette conductivité thermique plus élevée traduit une plus grande aptitude du ZnS à évacuer la chaleur, et permet de limiter l'amplitude des gradients et des distorsions thermiques induits au niveau des lentilles par l'irradiation à forte puissance.

Ces dispositifs optiques de collimation 13 et de focalisation 14 peuvent être choisis parmi les différents types de lentilles disponibles. Les lentilles sont préférablement des singlets afin de limiter le nombre de surfaces optiques du système de focalisation et de minimiser les risques d'endommagement. Différentes géométries de lentilles peuvent être utilisées, par exemple plan-convexe, biconvexe ou ménisque. Elles sont de préférence plan-convexe. Toutes les surfaces optiques sont préférablement traitées anti-reflet à la longueur d'onde du laser.

Les lentilles de la tête de coupage sont placées dans un support thermalisé. De l'eau circule dans le support et permet un refroidissement par contact indirect avec les lentilles. La température de l'eau est comprise entre 19 et 25 °C.

L'épaisseur et le diamètre des lentilles 13, 14 ont également une influence sur leur comportement thermique. Plus on augmente les dimensions des lentilles, mieux la chaleur est évacuée vers les zones périphériques plus froides, et plus l'amplitude des gradients thermiques diminue. Dans les têtes de coupage conventionnelles, on utilise des lentilles épaisses, c'est-à-dire d'une épaisseur aux bords d'au moins 5 mm, uniquement pour réaliser les opérations de focalisation. En effet, le gaz d'assistance est injecté directement après la lentille de focalisation, ce qui les expose à de fortes pressions. Les lentilles de focalisation doivent donc être épaisses pour avoir une bonne résistance mécanique. Dans le cadre de l'invention, afin de réduire le phénomène de dérive focale, on utilise des lentilles épaisses aussi bien pour la collimation que la focalisation du faisceau. Contrairement à ce qui se fait habituellement, la tête de coupage 3 est donc constituée de lentilles dont l'épaisseur aux bords est d'au moins 5 mm, et préférablement comprise entre 6 et 8 mm. De même qu'une plus grande épaisseur offre un meilleur comportement thermique, les optiques de plus grand diamètre évacuent mieux la chaleur vers leurs bords. Quelle que soit la dimension du faisceau impactant sur les optiques de la tête de coupage, la tête de coupage 3 met donc en oeuvre des lentilles dont le diamètre est compris entre 35 et 55 mm.

Dans la tête de coupage 3, un composant réflectif 15 est placé sur le trajet du faisceau laser 10 entre la lentille de collimation 13 et la lentille de focalisation 14. Ce composant est un miroir plan et ne modifie pas les paramètres de propagation du faisceau. Le substrat du miroir est constitué de silice fondue.

Au moins une face du miroir est revêtue d'un traitement réfléchissant. Ce revêtement est constitué de couches minces optiques et réfléchit la longueur d'onde du faisceau laser de coupage ainsi que les longueurs d'onde comprises entre 630 et 670 nm. Le traitement est en revanche transparent pour une partie du spectre visible ou infrarouge, incluant la longueur d'onde d'un système d'éclairage, par exemple une diode laser. De cette façon, il permet le raccordement d'un dispositif de contrôle de procédé (type caméra ou photodiode) à l'arrière du miroir. Il fonctionne à un angle d'incidence $\alpha$ compris entre 40 et 50°, de préférence égal à 45°. L'épaisseur du miroir est comprise entre 3 et 15 mm, de préférence entre 8 et 12 mm. Ce miroir permet tout d'abord de réduire l'encombrement vertical de la tête pour gagner en stabilité mécanique. De plus, dans cette configuration, la fibre de convoyage est maintenue à l'horizontale, ce qui réduit les risques d'introduction de poussière lors des opérations de montage et démontage de la fibre ou du collimateur. Enfin, l'intégration d'un composant réflectif sur le trajet du faisceau permet de compenser une partie de la dérive focale induite par les lentilles. En effet, le déplacement longitudinal du point focal induit par un composant réflectif a lieu dans la direction opposée à la dérive focale induite par un composant transmissif.

Les lentilles de la tête de coupage 3 sont aussi caractérisées par des distances focales spécifiques, adaptées au BPP de la fibre de convoyage utilisée. Ces focales sont nécessaires à l'obtention du diamètre de spot focal $2w_0$ adéquat pour couper le matériau traité. Pour une fibre de convoyage de diamètre 50 $\mu$m, le BPP du faisceau est typiquement compris entre 1.6 et 2.2 mm.mrad. Pour cette fibre, la distance focale de la lentille de collimation est comprise entre 70 et 120 mm, de préférence comprise entre 70 et 90 mm. Le choix de la distance focale de collimation conditionne ensuite celui de la distance focale de focalisation, en fonction du grandissement optique souhaité pour couper l'épaisseur du matériau traité.

Pour les matériaux dont l'épaisseur est strictement inférieure à 10 mm, la distance focale de focalisation est comprise entre 200 et 300 mm, de préférence entre 220 et 280 mm. Pour les matériaux dont l'épaisseur est supérieure ou égale à 10 mm, la distance focale de focalisation est comprise entre 350 et 450 mm, de préférence entre 380 et 420 mm.

Pour une fibre de convoyage de diamètre 100 $\mu$m, le BPP du faisceau est typiquement compris entre 2.6 et 4 mm.mrad. Pour cette fibre, la distance focale de la lentille de collimation est comprise entre 130 et 180 mm, de préférence comprise entre 140 et 180 mm. Pour les matériaux dont l'épaisseur est strictement inférieure à 10 mm, la distance focale de focalisation est comprise entre 200 et 300 mm, de préférence entre 220 et 280 mm. Pour les matériaux dont l'épaisseur est supérieure ou égale à 10 mm, la distance focale de focalisation est comprise entre 350 et 450 mm, de préférence comprise entre 380 et 420 mm.

La tête de focalisation 3 est alimentée en gaz d'assistance via une entrée de gaz 5 aménagée dans la paroi de ladite tête de focalisation 3, par laquelle un gaz ou mélange gazeux sous pression provenant d'une source de gaz, par exemple une ou plusieurs bouteilles de gaz, une capacité de stockage ou encore une ou plusieurs canalisations de gaz, tel un réseau de distribution de gaz, est introduit en amont de la buse 4 et est évacué par cette buse 4 en direction de la pièce 30 à découper par faisceau laser.

Le gaz d'assistance sert à chasser le métal fondu hors de la saignée 12 de coupe obtenue par fusion du métal au moyen du faisceau laser FL qui est focalisé à la position 11 par rapport à la surface de la pièce 10 à couper.

Le choix du gaz se fait en fonction des caractéristiques du matériau à couper, notamment de sa composition, de sa nuance, de son épaisseur. Par exemple, de l'air, de l'oxygène, des mélanges azote/oxygène ou hélium/azote peuvent être utilisés pour le coupage de l'acier, alors que de l'azote, des mélanges azote/hydrogène ou argon/azote peuvent être utilisés pour couper l'aluminium ou l'acier inoxydable.

En fait, la pièce 10 à découper par laser peut être formée de différents matériaux métalliques, tel que l'acier, l'acier inoxydable, l'acier doux ou les alliages légers, tel l'aluminium et ses alliages, voire le titane et ses alliages, et avoir une épaisseur typiquement comprise entre 0.1 mm et 30 mm.

Au cours du procédé de découpe, le faisceau laser peut être focalisé (en 11) dans l'épaisseur, ou sur ou à proximité immédiate d'une des surfaces de la pièce 10, c'est-à-dire à l'extérieur et à quelques mm au-dessus ou au-dessous de la surface supérieure 10a ou inférieure 10b de la pièce 10, ou sur la face supérieure 10a ou inférieure 10b. De préférence, la position 11 du point focal se situe entre 5 mm au-dessus de la surface supérieure 10a et 5 mm au-dessous de la surface inférieure 10b de la pièce 10.

Grâce à la présente invention, la position de focalisation du faisceau laser est maintenue stable au cours du processus de coupage puisqu'on évite ou on minimise toute dérive focale et tout endommagement des optiques, ce qui permet de garantir des performances sensiblement constantes tout au long de l'opération de coupage laser.

L'intérêt d'utiliser une ou des lentilles en ZnS plutôt qu'en silice fondue dans une tête de coupage laser a été mis en évidence en comparant la dérive focale induite lors de l'exposition à forte puissance de ces deux types de lentilles.

Pour cela, deux systèmes optiques constitués chacun d'une lentille de collimation de distance focale de 80 mm et d'une lentille de focalisation de 250 mm ont été comparés. L'un était constitué de lentilles en ZnS, l'autre en silice fondue.

La caustique du faisceau laser focalisé par chaque système a pu être enregistrée grâce à un analyseur de faisceau. Ce dispositif mesure le rayon du faisceau pour lequel 86% de la puissance du laser est contenue dans un disque de ce rayon et ceci dans des plans de propagation successifs se situant sur une distance d'environ 10 mm de part et d'autre du col du faisceau focalisé.

A partir de la caustique enregistrée, il est possible de déterminer la position du plan focal du faisceau laser le long de sa direction de propagation. L'évolution de la position du plan focal au cours d'une exposition prolongée des optiques de focalisation peut être suivie en effectuant une série d'analyses de faisceau.

Au cours de ces essais, chaque système optique a été exposé pendant environ 30 minutes. Dans la configuration optique étudiée, le faisceau avait un diamètre de 9.6 mm sur la lentille, conduisant à une densité de puissance de l'ordre de 2.8 kW/cm$^2$ à 2 kW.

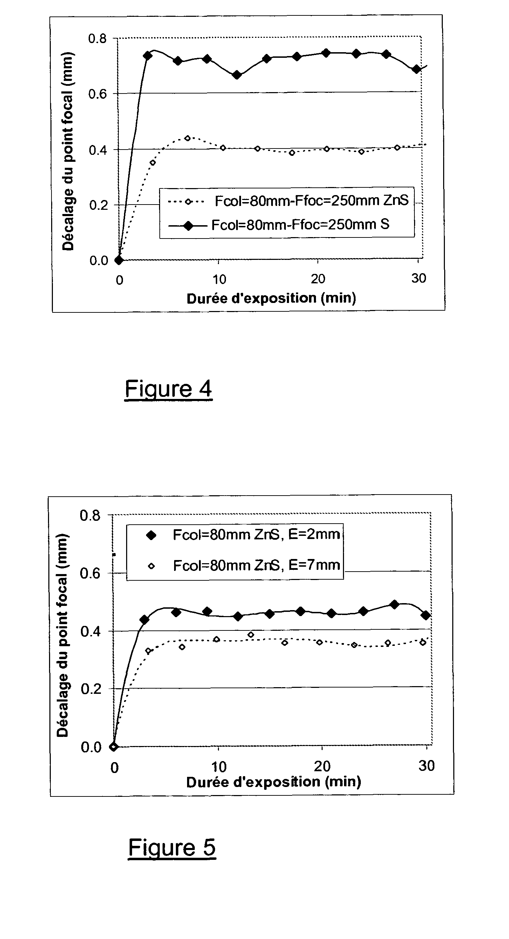

La Figure 4 présente une comparaison de l'évolution de la position du point focal du faisceau focalisé par un système de lentilles en ZnS ou en silice fondue (S). Pour chaque courbe, le premier point correspond à la position relevée lors d'une première analyse de faisceau effectuée à 200 W. A cette puissance, le décalage focal induit par l'effet de lentille thermique est négligeable. On peut considérer que la position mesurée correspond à la position où se situe le point focal du faisceau instantanément après l'allumage du laser. C'est ensuite à partir de cette position que l'on mesure le décalage focal. Le premier point des courbes correspond donc à un décalage du point focal nul.

Sur la Figure 5, on peut voir que le décalage longitudinal du point focal est plus important pour le système en silice fondue (S) que pour celui en ZnS. L'utilisation du ZnS permet ainsi de réduire l'amplitude du déplacement du point focal lors de l'irradiation des optiques à forte puissance.

L'effet d'une variation de l'épaisseur aux bords de la lentille de collimation a également été étudié. Pour cela, on a comparé l'amplitude du déplacement du point focal obtenu avec un système de lentilles en ZnS comprenant une lentille de collimation d'une épaisseur aux bords E de 2 mm ou un système comprenant une lentille de collimation d'épaisseur aux bords E de 7 mm.

La Figure 5 montre une comparaison de l'évolution de la position du point focal du faisceau focalisé par les deux systèmes, selon la méthode décrite ci-avant.

On peut voir que le décalage longitudinal du point focal est plus important lorsque la lentille de collimation est plus fine.

La combinaison des dispositifs optiques de l'invention permet de garantir la durabilité des performances du procédé de coupage laser, en particulier dans le cas d'un procédé de coupage laser obtenu avec un laser à solide, en particulier un laser à fibre, grâce à une maîtrise de l'amplitude du phénomène de dérive focale et des problèmes d'endommagement des optiques

## Revendications

1. Tête de focalisation de faisceau laser comprenant une lentille de collimation (13) et une lentille de focalisation (14), **caractérisée en ce que** :

   - la lentille de collimation (13) et la lentille de focalisation (14) sont en ZnS et ont une épaisseur aux bords d'au moins 5 mm, et
   - un miroir de renvoi (15) fonctionnant à un angle d'incidence ($\alpha$) compris entre 40 et 50° est agencé, sur le trajet du faisceau laser au sein de ladite tête de focalisation, entre les lentilles de collimation (13) et de focalisation (14).

2. Tête de focalisation selon la revendication 1, **caractérisée en ce que** la lentille de collimation (13) et la lentille de focalisation (14) ont une épaisseur aux bords comprise entre 5 et 10 mm, de préférence entre 6 et 8 mm.

3. Tête de focalisation selon l'une des revendications précédentes, **caractérisée en ce que** la lentille de collimation (13) et la lentille de focalisation (14) ont un diamètre compris entre 35 et 55 mm.

4. Tête de focalisation selon l'une des revendications précédentes, **caractérisée en ce que** le miroir de renvoi (15) est en silice.

5. Installation de coupage par faisceau laser comprenant :

   - un dispositif à laser solide (SL) émettant un faisceau laser de longueur d'onde comprise entre 1.06 et 1.10 $\mu$m et de puissance comprise entre 0.1 et 25 kW,
   - une tête de focalisation selon l'une des revendications précédentes, et
   - une fibre de convoyage (FDC) reliant le dispositif à laser solide (SL) à la tête de focalisation de manière à acheminer le faisceau laser émis par le dispositif à laser solide (SL) à la tête de focalisation.

6. Installation selon la revendication 5, **caractérisée en ce que** le dispositif à laser solide (SL) est de type à fibres, de préférence à fibres d'ytterbium.

7. Installation selon l'une des revendications 5 ou 6, **caractérisée en ce que** le dispositif à laser solide (SL) émet un faisceau laser de puissance comprise entre 1 et 5 kW en mode continu, quasi-continu ou impulsionnel, de préférence en mode continu.

8. Installation selon l'une des revendications 5 à 7, **caractérisée en ce que** la fibre de convoyage (FDC) a un diamètre inférieur ou égal à 150 μm, de préférence un diamètre de 50 μm ou de 100 μm.

9. Installation selon l'une des revendications 5 à 8, **caractérisée en ce que** le dispositif à laser solide (SL) émet un faisceau laser ayant un BPP compris entre 1.6 et 4 mm.mrad.

10. Installation selon l'une des revendications 5 à 9, **caractérisée en ce que** la fibre de convoyage (FDC) a un diamètre de 50 μm et un BPP compris entre 1.6 et 2.2 mm.mrad, et la lentille de collimation a une distance focale comprise entre 70 et 120 mm.

11. Installation selon l'une des revendications 5 à 9, **caractérisée en ce que** la fibre de convoyage (FDC) a un diamètre de 100 μm et un BPP compris entre 2.6 et 4 mm.mrad, et la lentille de collimation a une distance focale comprise entre 130 et 180 mm.

12. Installation selon l'une des revendications 5 à 11, **caractérisée en ce que** la lentille de focalisation a une distance focale comprise entre 200 et 450 mm.

13. Procédé de coupage par faisceau laser d'une pièce métallique (10), dans lequel on met en oeuvre une tête de focalisation selon l'une des revendications 1 à 4 ou une installation de coupage par faisceau laser selon l'une des revendications 5 à 12.


**Patentansprüche**

1. Fokussierkopf für Laserstrahl, umfassend eine Kollimationslinse (13) und eine Fokussierlinse (14), **dadurch gekennzeichnet, dass**

   - die Kollimationslinse (13) und die Fokussierlinse (14) aus ZnS sind und an den Rändern eine Dicke von mindestens 5 mm haben und
   - ein Umlenkspiegel (15), der bei einem Einfallwinkel ($\alpha$) zwischen 40 und 50° arbeitet, in dem Pfad des Laserstrahls in dem Fokussierkopf, zwischen der Kollimationslinse (13) und der Fokussierlinse (14) angeordnet ist.

2. Fokussierkopf nach Anspruch 1, **dadurch gekennzeichnet, dass** die Kollimationslinse (13) und die Fokussierlinse (14) an den Rändern eine Dicke zwischen 5 und 10 mm, vorzugsweise zwischen 6 und 8 mm, haben.

3. Fokussierkopf nach einem der vorhergehenden Ansprüche, **dadurch gekennzeichnet, dass** die Kollimationslinse (13) und die Fokussierlinse (14) einen Durchmesser zwischen 35 und 55 mm haben.

4. Fokussierkopf nach einem der vorhergehenden Ansprüche, **dadurch gekennzeichnet, dass** der Umlenkspiegel (15) aus Siliziumoxid ist.

5. Installation zum Laserstrahlschneiden, umfassend:

   - eine Festkörperlaser-Vorrichtung (SL), die einen Laserstrahl mit einer Wellenlänge zwischen 1,06 und 1,10 μm und einer Leistung zwischen 0,1 und 25 kW emittiert,
   - einen Fokussierkopf nach einem der vorhergehenden Ansprüche und
   - eine Transportfaser (FDC) zur Verbindung der Festkörperlaser-Vorrichtung (SL) mit dem Fokussierkopf, derart, dass der von der Festkörperlaser-Vorrichtung (SL) emittierte Laserstrahl zu dem Fokussierkopf geleitet wird.

6. Installation nach Anspruch 5, **dadurch gekennzeichnet, dass** die Festkörperlaser-Vorrichtung (SL) des Typs mit Fasern ist, vorzugsweise mit Ytterbium-Fasern.

7. Installation nach einem der Ansprüche 5 oder 6, **dadurch gekennzeichnet, dass** die Festkörperlaser-Vorrichtung (SL) einen Laserstrahl emittiert mit einer Leistung zwischen 1 und 5 kW im kontinuierlichen Modus, im fast kontinuierlichen Modus oder Impulsmodus, vorzugsweise im kontinuierlichen Modus.

8. Installation nach einem der Ansprüche 5 bis 7, **dadurch gekennzeichnet, dass** die Transportfaser (FDC) einen Innendurchmesser von kleiner oder gleich 150 μm, vorzugsweise einen Durchmesser von 50 μm oder 100 μm, aufweist.

9. Installation nach einem der Ansprüche 5 bis 8, **dadurch gekennzeichnet, dass** die Festkörperlaser-Vorrichtung (SL) einen Laserstrahl emittiert, der ein SPP zwischen 1,6 und 4 mm × mrad aufweist.

10. Installation nach einem der Ansprüche 5 bis 9, **dadurch gekennzeichnet, dass** die Transportfaser (FDC) einen Durchmesser von 50 μm und ein SPP zwischen 1,6 und 2,2 mm × mrad aufweist und die Kollimationslinse eine Brennweite zwischen 70 und 120 mm hat.

11. Installation nach einem der Ansprüche 5 bis 9, **dadurch gekennzeichnet, dass** die Transportfaser (FDC) einen Durchmesser von 100 μm und ein SPP zwischen 2,6 und 4 mm × mrad aufweist und die Kollimationslinse eine Brennweite zwischen 130 und 180 mm hat.

12. Installation nach einem der Ansprüche 5 bis 11, **dadurch gekennzeichnet, dass** die Fokussierlinse eine Brennweite zwischen 200 und 450 mm hat.

13. Verfahren zum Laserstrahlschneiden eines Metallteils (10), bei dem ein Fokussierkopf nach einem der Ansprüche 1 bis 4 oder eine Installation zum Laserstrahlschneiden nach einem der Ansprüche 5 bis 12 verwendet wird.

## Claims

1. Laser beam focusing head comprising a collimating lens (13) and a focusing lens (14), **characterised in that**:

   - the collimating lens (13) and the focusing lens (14) are made of ZnS and have a thickness at the edges of at least 5 mm, and
   - a deflecting mirror (15) operating at an angle of incidence ($\alpha$) of between 40 and 50° is placed, in the path of the laser beam within said focusing head, between the collimating lens (13) and the focusing lens (14).

2. Focusing head according to claim 1, **characterised in that** the collimating lens (13) and the focusing lens (14) have a thickness at the edges of between 5 and 10 mm, preferably between 6 and 8 mm.

3. Focusing head according to either of the preceding claims, **characterised in that** the collimating lens (13) and the focusing lens (14) have a diameter of between 35 and 55 mm.

4. Focusing head according to any of the preceding claims, **characterised in that** the deflecting mirror (15) is made of silica.

5. Laser cutting unit comprising:

   - a solid-state laser device (SL) emitting a laser beam with a wavelength of between 1.06 and 1.10 μm and a power of between 0.1 and 25 kW,
   - a focusing head according to any of the preceding claims, and
   - a conveying fibre (FDC) connecting the solid-state laser device (SL) to the focusing head so as to convey the laser beam emitted by the solid-state laser device (SL) to the focusing head.

6. Unit according to claim 5, **characterised in that** the solid-state laser device (SL) is of the fibre type, preferably of the ytterbium fibre type.

7. Unit according to either claim 5 or claim 6, **characterised in that** the solid-state laser device (SL) emits a laser beam with a power of between 1 and 5 kW in continuous, quasi-continuous or pulsed mode, preferably in continuous mode.

8. Unit according to any of claims 5 to 7, **characterised in that** the conveying fibre (FDC) has a diameter of less than or equal to 150 μm, preferably a diameter of 50 μm or 100 μm.

9. Unit according to any of claims 5 to 8, **characterised in that** the solid-state laser device (SL) emits a laser beam having a BPP of between 1.6 and 4 mm.mrad.

10. Unit according to any of claims 5 to 9, **characterised in that** the conveying fibre (FDC) has a diameter of 50 μm

and a BPP of between 1.6 and 2.2 mm.mrad, and the collimating lens has a focal length of between 70 and 120 mm.

11. Unit according to any of claims 5 to 9, **characterised in that** the conveying fibre (FDC) has a diameter of 100 $\mu$m and a BPP of between 2.6 and 4 mm.mrad, and the collimating lens has a focal length of between 130 and 180 mm.

12. Unit according to any of claims 5 to 11, **characterised in that** the focusing lens has a focal length of between 200 and 450 mm.

13. Laser cutting process for cutting a metal part (10), wherein a focusing head according to any of claims 1 to 4 or a laser cutting unit according to any of claims 5 to 12 is used.

Figure 1

Figure 2

# Figure 3

## Figure 4

## Figure 5

**EP 2 473 315 B1**

**RÉFÉRENCES CITÉES DANS LA DESCRIPTION**

**Documents brevets cités dans la description**

- FR 2897007